Europäisches Patentamt

European Patent Office

Office européen des brevets

(19)

(11) Veröffentlichungsnummer: **0 170 062**
**A2**

(12) **EUROPÄISCHE PATENTANMELDUNG**

(21) Anmeldenummer: 85107999.6

(22) Anmeldetag: 27.06.85

(51) Int. Cl.⁴: **A 47 J 41/02**

(30) Priorität: 30.07.84 DE 3428081

(43) Veröffentlichungstag der Anmeldung:
05.02.86 Patentblatt 86/6

(84) Benannte Vertragsstaaten:
AT BE CH DE FR GB IT LI LU NL SE

(71) Anmelder: Rotpunkt Dr. Anso Zimmermann
Industriestrasse
D-6434 Niederaula / Bad Hersfeld(DE)

(72) Erfinder: Zimmermann, Anso, Dr.
Seilerweg 34
D-6430 Bad Hersfeld(DE)

(74) Vertreter: Körber, Wolfhart, Dr. et al,
Patentanwälte Dipl.-Ing. H. Mitscherlich Dipl.-Ing. K.
Gunschmann Dr.rer.nat. W. Körber Dipl.Ing. J.
Schmidt-Evers Dipl.-Ing. W. Melzer Steinsdorfstrasse 10
D-8000 München 22(DE)

(54) Isoliergefäss, insbesondere Isolierkanne oder -flasche.

(57) Die Erfindung bezieht sich auf ein Isoliergefäß, insbesondere Isolierkanne oder -flasche, bestehend aus einem Gehäuse mit einer oberseitigen Öffnung, die durch ein Verschlußglied verschließbar ist, wobei dem Isoliergefäß ein Sieb-Hohlkörper zugeordnet ist, der in seiner in das Isoliergefäß eingesetzten Position durch die Öffnung in das Gehäuse hineinragt. Es ist der Zweck der Erfindung, das Isoliergefäß so auszugestalten, daß beim Zubereiten von Tee oder dergleichen im Isoliergefäß ein einfaches Füllen des Isoliergefäßes auf ein angestrebtes (maximales) Flüssigkeitsniveau möglich ist. Dies wird dadurch erreicht, daß der Sieb-Hohlkörper (15) ein Anlageteil (19) zur Anlage am Gehäuse (2) und einen Füllstutzen (17) mit einer Markierung (32) aufweist, die in einer solchen Höhe (33) oberhalb des angestrebten Füllniveaus (34) im Isoliergefäß angeordnet ist, daß das von der Wand des Sieb-Hohlkörpers (15) unterhalb der Markierung (32) einschließlich des im Sieb-Hohlkörper (15) eingefüllten Inhalts (Tee) eingenommene Volumen größer ist als der sich zwischen dem angestrebten Flüssigkeitsniveau (34) und der Markierung (32) erstreckende Füllraum (R).

./...

EP 0 170 062 A2

FIG.1

## Isoliergefäß, insbesondere Isolierkanne oder -flasche

Die Erfindung bezieht sich auf ein Isoliergefäß der im Oberbegriff des Anspruchs 1 beschriebenen Bauart.

Solche Isoliergefäße sind nicht nur dazu geeignet, Speisen und Getränke aufzunehmen und warm- bzw. kaltzuhalten, sondern es ist auch möglich, besondere Behandlungen des aufzunehmenden Gutes, z.B. Teezubereitung, im Isoliergefäß vorzunehmen. Im DE-GM 82 33 625 ist ein Isoliergefäß beschrieben, dem hierzu ein Sieb-Hohlkörper zugeordnet ist, der an der Unterseite des Verschlußstopfens für das Isoliergefäß befestigbar ist. Diese Ausgestaltung führt zu dem Vorteil, daß während des Gebrauchs des Sieb-Hohlkörpers, z.B. zur Zubereitung von Tee, das Isoliergefäß verschlossen ist und somit keine Wärme entweichen kann.

Die bekannte Ausgestaltung hat sich als brauchbar erwiesen, sie bedingt jedoch eine verhältnismäßig umständliche Handlungsweise bei der Teezubereitung, weil das Aufgußwasser vor dem Einsetzen des mit Tee gefüllten Sieb-Hohlkörpers in das Isoliergefäß eingefüllt werden muß. So zu verfahren ist an sich einfach, jedoch ergeben sich dann Schwierigkeiten, wenn die Aufnahmekapazität des Isoliergefäßes möglichst vollständig ausgenutzt werden soll und der Flüssigkeitsspiegel nach dem Herausnehmen des Sieb-Hohlkörpers samt Inhalt deshalb in der Höhe des angestrebten Niveaus liegen soll.

Bei der bekannten Bauart ist ein solches angestrebtes, maximales Füllniveau im Isoliergefäß nicht erreichbar, weil der Flüssigkeitsspiegel im Isoliergefäß nach dem Entfernen des Sieb-Hohlkörpers samt Inhalt um das vom Sieb-Hohlkörper samt Inhalt verdrängte Volumen absinkt.

Der Erfindung liegt die Aufgabe zugrunde, eine Isolierkanne der eingangs bezeichneten Bauart so auszugestalten, daß ein angestrebtes, möglichst maximales Füllniveau erreichbar ist.

Diese Aufgabe wird durch die im Anspruch 1 enthaltenen Merkmale gelöst.

Der wesentliche Vorteil der erfindungsgemäßen Ausgestaltung besteht darin, daß das Isoliergefäß beim Füllen um eine solche Flüssigkeitsmenge "überfüllt" werden kann, die dem Volumen des von der Sieb-Hohlkörperwandung und dem im Sieb-Hohlkörper befindlichen Inhalt entspricht. Infolgedessen sinkt das Niveau der eingefüllten Flüssigkeit beim Herausnehmen des Sieb-Hohlkörpers einschließlich Inhalt auf das angestrebte Flüssigkeitsniveau ab. Hierzu dient die Markierung am Sieb-Hohlkörper, die ein bestimmtes Fassungsvolumen des Isoliergefäßes begrenzt, nämlich das Fassungsvolumen, das durch die Differenz zwischen dem Füllniveau und dem angestrebten Flüssigkeitsniveau bestimmt ist.

Darüberhinaus ermöglicht die erfindungsgemäße Ausgestaltung eine einfache Handhabung bei der Zubereitung, z.B. eines Tees, weil der Sieb-Hohlkörper samt Teeblättern vor dem Füllen des Isoliergefäßes in dieses eingesetzt werden kann. Beim nachfolgenden Füllen des Isoliergefäßes durch den Sieb-Hohlkörper samt Inhalt hindurch, folgt eine intensive Herauslösung der Teesubstanzen und Aromastoffe.

Bei der vorbeschriebenen Erläuterung wird vorausgesetzt, daß sich das Füllniveau unterhalb der Oberseite des Isoliergefäßes befindet, so daß die Flüssigkeit auch außerhalb des Sieb-Hohlkörpers aufzusteigen vermag, ohne überzulaufen. Mit einem solchen Aufsteigen der Flüssigkeit ist zu rechnen, wenn das Anlageteil des Sieb-Hohlkörpers sich oberhalb der Markierung befindet oder wenn sich das Anlageteil zwar unterhalb der Markeirung befindet, jedoch keine besonderen Abdichtungsmaßnahmen zwischen dem Anlageteil und dem Gehäuse vorgesehen sind, so daß die Flüssigkeit über das Anlageteil hinaus außerhalb des Sieb-Hohlkörpers aufzusteigen vermag.

Im Rahmen der Erfindung ist es jedoch auch möglich, das Füllniveau, nämlich die Markierung, oberhalb der Oberseite des Isoliergefäßes zu bestimmen. Dies ist dann möglich, wenn eine Abdichtung zwischen dem Anlageteil und dem Gehäuse vorgesehen wird, so daß die Flüssigkeit außerhalb des Sieb-Hohlkörpers nicht über das Anlageteil hinaus aufsteigen kann.

Die Ausgestaltung nach Anspruch 2 erleichtert das Einfüllen, weil ein trichterförmiger und somit ein vergrößerter Einlaß des Sieb-Hohlkörpers zur Verfügung steht.

Die in den Ansprüchen 3 bis 5 enthaltenen Merkmale ermöglichen die Sichtbarkeit der oberen Grenze des vorbeschriebenen Fassungsvolumens. Als Mittel kann hierzu ein Pfeil, der in Umfangsrichtung weist oder ein Pfeil, der mit seiner Spitze bis zum Füllniveau zeigt, oder ein Ringwulst oder eine Ringnut zur Anwendung kommen.

Die Ausgestaltung nach Anspruch 6 führt zu einer stabilen Auflage des Sieb-Hohlkörpers auf dem Gehäuse. Es wäre zwar auch denkbar, einen beispielsweise kegelförmigen Sieb-Hohlkörper in die Öffnung einzusetzen, wodurch sich eine linienförmige Anlage ergeben würde, die ggf. sogar abdichtend wirken könnte, jedoch wäre diese Abstützung des Sieb-Hohlkörpers labil.

Die im Anspruch 7 enthaltene Maßnahme verbessert die Griffestigkeit des Sieb-Hohlkörpers und somit seine Handhabung.

Durch die Ausgestaltung nach Anspruch 8 wird nicht nur eine verhältnismäßig große Baugröße vermieden, sondern es wird auch die Reinigung des Sieb-Hohlkörpers vereinfacht, weil dieser zweistückig ausgebildet ist, wobei das eine Teil durch den Füllstutzen und das andere Teil durch ein Siebteil gebildet ist, die in bevorzugter Weise durch einen Bajonettverschluß gemäß Anspruch 9 aneinander festlegbar sind.

Die Ausgestaltung nach Anspruch 1o knüpft an den schon beschriebenen Sachverhalt an, bei dem die Flüssigkeit außerhalb des Füllstutzens aufzusteigen vermag. Hierzu dient die Ausnehmung oberhalb der Öffnung des Gehäuses, die bei Isolierkannen an sich bekannt ist, und von der radial auswärts ein Ausgießer verläuft. Damit die beim Füllen des Isoliergefäßes durch den Ringspalt zwischen dem Öffnungsrand und dem Sieb-Hohlkörper oder dem Füllstutzen in der Ausnehmung aufsteigende Flüssigkeit nicht durch den Ausgießer auszutreten vermag, wird dieser zweckmäßig schräg aufwärts verlaufend ausgebildet, so daß die Ausgießerspitze höher steht als das Füllniveau.

Nachfolgend wird ein Ausführungsbeispiel der Erfindung anhand einer vereinfachten Zeichnung beschrieben.

Es zeigt

Fig. 1    eine erfindungsgemäß ausgestaltete Isolierkanne im lotrechten Querschnitt mit eingesetztem Sieb-Hohlkörper;

Fig. 2    eine Draufsicht auf das Siebteil des Sieb-Hohlkörpers.

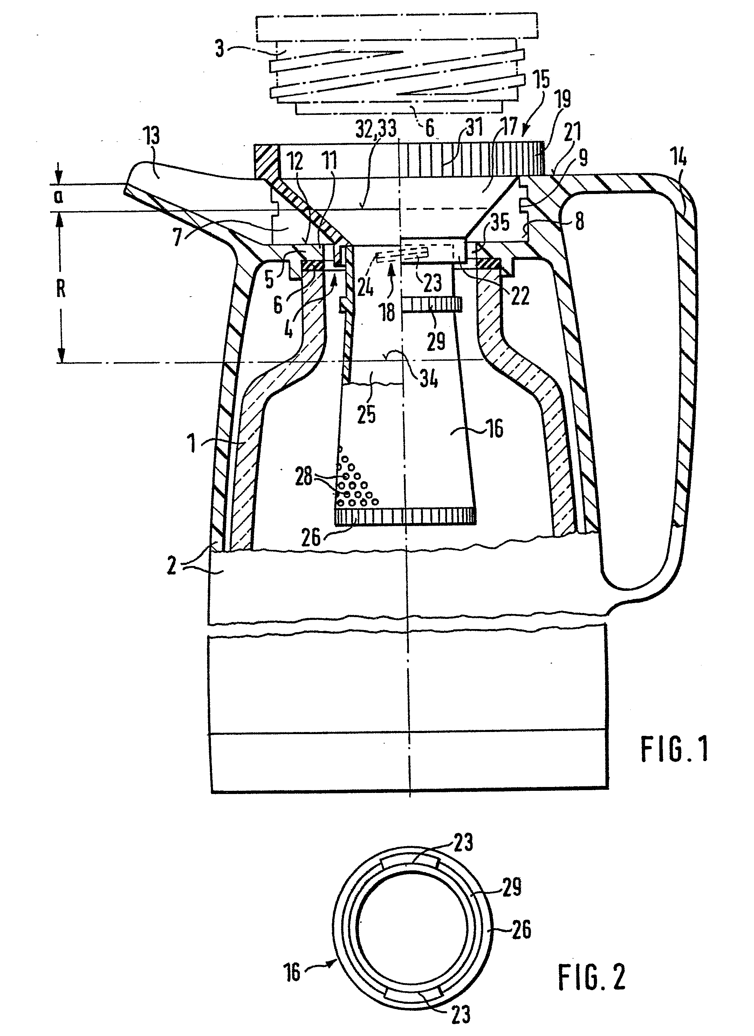

Die in Fig. 1 teilweise dargestellte Isolierkanne besteht aus einem wärmeisolierenden Isoliereinsatz 1, einem dieses umgebenden Schutzgehäuse 2 und einem andeutungsweise dargestellten Verschlußstopfen 3, der in Fig. 1 in von der Isolierkanne abgehobener Position dargestellt ist. Der die Öffnung 4 der Isolierkanne bildende Rand des Isoliereinsatzes 1 ist in nicht dargestellter Weise gegen ein Kopfteil 5 des Schutzgehäuses 2 verspannt und durch eine Dichtung 6 abgedichtet. Oberhalb der Öffnung 4 erstreckt sich im Schutzgehäuse 2 eine gegenüber der Öffnung 4 erweiterte Ausnehmung 7 runden Querschnitts, an deren zylindrischer Innenwand 8 sich segmentförmige Gewindeabschnitte 9 befinden, die dem Einschrauben des als Schraubdeckel ausgebildeten Verschlußstopfens 3 dienen. In der Schließstellung des Verschlußstopfens 3 ist die Dichtung 6 im Bereich des Öffnungsrandes 11 gegen den Boden 12 der Ausnehmung 7 gedrückt, wodurch ein dichter Verschluß gewährleistet ist. In der Öffnungsstellung des Verschlußstopfens 3 , in der dieser gegenüber der vorbeschriebenen Schließstellung um 180° aufgeschraubt ist, kann die sich im Isoliereinsatz 1 befindliche Flüssigkeit bei geneigter Stellung der Isolierkanne durch den sich radial auswärts von der Ausnehmung 7 erstreckenden Ausgießer 13 ausgegossen werden.

Mit 14 ist ein Henkel bezeichnet, der einstückig an das Schutzgehäuse 2 angeformt ist.

In die Isolierkanne ist ein allgemein mit 15 bezeichneter Sieb-Hohlkörper eingesetzt, der der Zubereitung von Tee oder dergleichen dient, und der aus einem Siebteil 16 und einem Trichter 17 besteht, die durch einen allgemein mit 18 bezeichneten Bajonettverschluß miteinander verbunden sind. Der Trichter 17 weist an seiner Oberseite eine außenseitig vorstehende Schulter 19 auf, die im Durchmesser größer bemessen ist als der Durchmesser der Ausnehmung 7, und mit der er auf der Oberseite 21 der Isolierkanne aufliegt. An der Unterseite des Trichters 17 befindet sich eine hohlzylindrische Fassung 22, in die das obere unverschlossene Ende des Siebteils 16 eingesetzt ist. Die Fassung 22 weist auf ihrer Innenseite 2 diametral gegenüberliegende segmentförmige Vorsprünge 23 auf, die von zwei korrespondierenden Vorsprüngen 24 auf der Außenseite des Siebteils 16 hinterfaßt werden. Zum Anschließen bzw. Lösen des Siebteils 16 vom Trichter 17 bedarf es einer Drehung des Siebteils 16 um etwa 90$^\circ$.

Der Innenraum 25 des Siebteils 16 divergiert nach unten und ist durch einen ein- bzw. ausschraubbaren Siebboden 26 verschlossen. Im Siebboden 26 und im Mantel 27 des Siebteils 16 befinden sich eine Vielzahl Sieblöcher 28, von denen aus Vereinfachungsgründen nur einige dargestellt sind. Mit 29 ist ein gerändelter Bund bezeichnet, der sich in der Nähe des oberen Endes des Siebteils 16 auf dessen Außenseite befindet und dessen Zweck es ist, die Griffestigkeit beim Anschließen bzw. Lösen des Siebteils 16 vom Trichter 17 zu erhöhen. Dem gleichen Zweck dient auch eine Rändelung 31 an der Außenseite der Schulter 19.

Auf der Innenseite des Trichters 17 befindet sich eine kerbenförmige Ringnut 32, die eine noch zu beschreibende Füllhöhe 33 begrenzt. Ein angestrebtes und andeutungsweise mit einer strichpunktierten Linie dargestelltes Flüssigkeitsniveau in der Isolierkanne ist mit 34 bezeichnet. Zwischen der Füllhöhe 33 und dem angestrebten Flüssigkeitsniveau 34 besteht folgende Beziehung.

Das Volumen der Sieb-Hohlkörperwandung unterhalb der Füllhöhe 33 einschließlich des in den Sieb-Hohlkörper eingefüllten Tees, ist größer bemessen als der vom Kopfteil 5 und vom Isoliereinsatz 1 umschlossene Raum R zwischen der Füllhöhe 33 und dem angestrebten Flüssigkeitsninveau 34.

Eine Teezubereitung erfolgt folgendermaßen. Das mit Teeblättern gewisser Menge gefüllte Siebteil 16 wird mit dem angeschlossenen Trichter 17 -wie dargestellt- in die Isolierkanne eingesetzt. Danach wird heißes Wasser durch den Sieb-Hohlkörper 15 in die Isolierkanne eingefüllt, und zwar bis zur Füllhöhe 33. Nachdem der Tee eine vorbestimmte Zeit gezogen hat, wird der Sieb-Hohlkörper 15 aus der Isolierkanne herausgezogen. Dabei fällt aufgrund der vorbeschriebenen Bemessung der Flüssigkeitsspiegel von der Füllhöhe 33 auf das angestrebte Flüssigkeitsniveau 34 ab.

Beim Einfüllen sowohl des Tees als auch Aufgußwassers erweist sich der divergierende Trichter 17 als ein vorteilhafter Einfüllstutzen. Die Anordnung ist so getroffen, daß der Kegel des Trichters 17 zum Öffnungsrand der Ausnehmung 7 ausläuft, wodurch eine Zentrierung des Sieb-Hohlkörpers 15 in der Ausnehmung 7 und in der Öffnung 4 gegeben ist.

Beim vorbeschriebenen Ausführungsbeispiel ist zu berücksichtigen, daß beim Füllen der Isolierkanne auf die Füllhöhe 33 die Flüssigkeit nicht nur im Sieb-Hohlkörper 15, sondern auch außerhalb diesem durch den zwischen dem Trichter 17 und dem Öffnungsrand 11 befindlichen Ringspalt 35 auch in die Ausnehmung 7 außerhalb des Trichters 17 aufsteigt. Um ein Ausfließen der Flüssigkeit beim Füllen auf Füllhöhe 33 zu verhindern, ist die Spitze 36 des Ausgießers 13 in einem Abstand a oberhalb der Füllhöhe 33 angeordnet.

Beim vorbeschriebenen Ausführungsbeispiel befindet sich die Füllhöhe 33 unterhalb der Oberseite 21 der Isolierkanne. Es ist im Rahmen der Erfindung jedoch auch möglich, die durch die Ringnut 32 gebildete Markierung der Füllhöhe 33 höher als die Oberseite 21 zu bestimmen. In einem solchen Fall muß allerdings gewährleistet sein, daß die Flüssigkeit außerhalb des Trichters 17 nicht über die Oberseite der Isolierkanne steigt. Dies kann zum Beispiel dadurch erreicht werden, daß der Sieb-Hohlkörper 15 dichtend auf den Öffnungsrand 11 der Isolierkanne aufgesetzt wird.

Es ist im Rahmen der Erfindung auch möglich, den Sieb-Hohlkörper 15 einstückig auszuführen. Durch die vorbeschriebene Zweistückigkeit werden zum einen kleine Bauteile geschaffen und zum anderen wird das Reinigen, insbesondere des Siebteils 16 erleichtert. Hierzu wird der Siebboden 26 entfernt. Aufgrund der Konizität des Siebteils 16 läßt sich der Tee verhältnismäßig leicht nach unten entfernen.

Der Trichter 17, das Siebteil 16 und das Schutzgehäuse 2 bestehen aus Kunststoff.

PATENTANWÄLTE
Dipl.-Ing. H. MITSCHERLICH
Dipl.-Ing. K. GUNSCHMANN
Dipl.-Ing. Dr. rer. nat. W. KÖRBER
Dipl.-Ing. J. SCHMIDT-EVERS
Dipl.-Ing. W. MELZER
EUROPEAN PATENT ATTORNEYS

**0170062**

Telefon (089) 29 66 84-86
Telex 523 155 mitsh d
Telegramme Patentpaap
Telecopier (089) 29 39 63
Psch-Kto. Mchn. 195 75-803
EPA-Kto. 28 000 206

Steinsdorfstraße 10
D-8000 München 22

ROTPUNKT
Dr. Anso Zimmermann
Industriestraße

6434 Niederaula / Bad Hersfeld

## A n s p r ü c h e

1. Isoliergefäß, insbesondere Isolierkanne oder -flasche, bestehend aus einem Gehäuse mit einer oberseitigen Öffnung, die durch einen Verschlußstopfen verschließbar ist, wobei dem Isoliergefäß ein Sieb-Hohlkörper zugeordnet ist, der in einer in das Isoliergefäß eingesetzten Position durch die Öffnung in das Gehäuse hineinragt,

dadurch gekennzeichnet,

daß der Sieb-Hohlkörper (15) ein Anlageteil (19) zur Anlage am Gehäuse (2) und einen Füllstutzen (17) mit einer Markierung ($3_2$) aufweist, die in einer solchen Höhe (33) oberhalb des angestrebten Füllniveaus (34) im Isoliergefäß angeordnet ist, daß das von der Wand des Sieb-Hohlkörpers (15) unterhalb der Markierung (32) einschließlich des im Sieb-Hohlkörper (15) eingefüllten Inhalts (Tee) eingenommene Volumen größer ist, als der sich zwischen dem angestrebten Flüssigkeitsniveau (34) und der Markierung (33) erstreckende Füllraum (R).

0170062

2. Isoliergefäß nach Anspruch 1,
   dadurch gekennzeichnet,
   daß der Füllstutzen (17) trichterförmig ausgebildet
   ist.

3. Isoliergefäß nach Anspruch 1 oder 2,
   dadurch gekennzeichnet,
   daß der Füllstutzen (17) aus undurchsichtigem Material
   besteht und die Markierung (32) auf der Innenseite
   des Füllstutzens (17) angeordnet ist.

4. Isoliergefäß nach Anspruch 3,
   dadurch gekennzeichnet,
   daß die Markierung durch eine Materialerhöhung oder
   -vertiefung gebildet ist.

5. Isoliergefäß nach Anspruch 4,
   dadurch gekennzeichnet,
   daß die Materialerhöhung oder -vertiefung ein Pfeil
   oder eine Ringnut (32) oder ein Ringwulst ist.

6. Isoliergefäß nach einem der Ansprüche 1 bis 5,
   dadurch gekennzeichnet,
   daß der Füllstutzen (17) mit einer Schulter (19) auf
   der Oberseite (21) des Gehäuses (2) bzw. des Isoliergefäßes aufliegt.

7. Isoliergefäß nach einem der Ansprüche 1 bis 6,
   dadurch gekennzeichnet,
   daß wenigstens ein Abschnitt der oberen Außenfläche
   des Füllstutzens (17), bevorzugt die Außenfläche (31)
   der Schulter (19) zum Zweck der Erhöhung der Grifffestigkeit gerauht, gerändelt oder genutet ist.

8. Isoliergefäß nach einem der Ansprüche 1 bis 7,
   dadurch gekennzeichnet,
   daß der Sieb-Hohlkörper (15) zweistückig ausgebildet ist und aus dem Füllstutzen (17) und einem an seiner Unterseite befestigbaren Siebteil (16) besteht.

9. Isoliergefäß nach Anspruch 8,
dadurch gekennzeichnet,
daß der Sieb-Hohlkörper (15) durch einen Bajonettverschluß (18) an den Füllstutzen (17) befestigbar ist.

10. Isoliergefäß nach einem der Ansprüche 1 bis 9,
dadurch gekennzeichnet,
daß oberhalb der Öffnung (4) eine gegenüber dieser erweiterte Ausnehmung (7) im Gehäuse (2) angeordnet ist, daß zwischen dem Öffnungsrand (11) und dem Sieb-Hohlkörper (15) ein Ringspalt (35) besteht und daß der Sieb-Hohlkörper (15) auf der Oberseite (21) des Gehäuses (2) aufliegt.

11. Isoliergefäß nach einem der Ansprüche 1 bis 10,
dadurch gekennzeichnet,
daß das Siebteil (16) und der Füllstutzen (17) aus Kunststoff bestehen.

0170062

FIG. 1

FIG. 2